# EUROPÄISCHE PATENTANMELDUNG

(11) **EP 1 491 311 A1**
(43) Veröffentlichungstag der Anmeldung: **29.12.2004**
(21) Anmeldenummer: 04013467.8
(22) Anmeldetag: 08.06.2004
(51) Int. Cl.: B29C 33/04, B29C 63/16

(54) **Kaschiervorrichtung**

(30) Priorität: 24.06.2003 DE 20309721 U
(71) Anmelder: Frimo-Huber, Systemtechnik GmbH & Co., 83395 Freilassing (DE)
(72) Erfinder: WALDHERR, Otto, 83317 Teisendorf (DE); RAUSCH, Franz, 5151 Nussdorf (AT)
(74) Vertreter: Solf, Alexander, Dr.

(57) **Zusammenfassung**

Die Erfindung betrifft eine Kaschiervorrichtung (1) zum Kaschieren eines Trägerformteils (12) mit einem Bezugsstoff (13), aufweisend ein Unterwerkzeug (2) und ein Oberwerkzeug (3), die über Mittel zum Einspannen in eine Kaschierpresse verfügen und zwischen sich einen Arbeitsraum (4) bilden, wobei die Unterwerkzeugoberfläche (10) dem Trägerformteil (12) entsprechend konturiert mit Erhöhungen (14), mit Kantenbereichen und Vertiefungen (15), mit Flankenbereichen (15a) sowie die Oberwerkzeugoberfläche (24) entsprechend als Matrize mit Vertiefungen (26) und Erhöhungen (27) mit Eckbereichen (26a) und Flankenwandungsbereichen (27a) konturiert sind und wobei das Oberwerkzeug (3) arbeitsräumseitig ein elastisches Andrückmittel aufweist, wobei das Andrückmittel eine die Matrizenoberfläche abdeckende Membrane (28) ist, die jeweils lediglich in Randbereichen der Matrizenoberfläche (24) fluiddicht am Oberwerkzeug (3) befestigt ist und insbesondere auch die Eckbereiche (26a) und Flankenwandungsbereiche (27a) überdeckt.

## Beschreibung

Die Erfindung betrifft eine Kaschiervorrichtung zum Kaschieren von konturierten Trägerformteilen, z.B. zum Kaschieren von Innenraumverkleidungsteilen eines Kraftfahrzeuges mit einem Bezugsmaterial.

Bekannte Kaschiervorrichtungen bestehen aus einem Oberwerkzeug und einem Unterwerkzeug. Die Werkzeuge werden in eine Kaschierpresse sich gegenüberliegend eingespannt, wobei zwischen dem Ober- und dem Unterwerkzeug ein Arbeitsraum zum Einbringen zu kaschierender Teile verbleibt. Mit der Kaschierpresse können die Werkzeuge zum Kaschieren zusammengefahren werden.

Das Unterwerkzeug weist i.d.R. eine mit Einspannmitteln zum Einspannen in die Kaschierpresse versehene Grundplatte auf, auf der in Richtung Arbeitsraum bei beheizten Werkzeugen eine Isolationsplatte und auf der Isolationsplatte ein an der arbeitsraumseitigen Oberfläche den Konturen des zu kaschierenden Trägerformteils entsprechend konturierter Werkzeugkörper - im Folgenden auch Stempel genannt - angeordnet sind. Der Stempel kann mit einem zur freien Oberfläche hin mündenden Kanalsystem durchsetzt sein, das in mindestens einen, an ein Vakuumsystem anschließbaren Vakuumanschlusskanal mündet. Des Weiteren ist der Stempel i.d.R. mit einem Heizkanalsystem durchsetzt, das in mindestens einen, an ein mit einem Vor- und Rücklauf versehenen Heizsystem anschließbaren Heizmediumanschlusskanal mündet.

Das Oberwerkzeug ist ebenfalls i.d.R. auf eine Einspannmittel aufweisende Grundplatte montiert, auf der sich in Richtung Arbeitsraum eine Isolationsplatte befindet. Auf der Isolationsplatte ist ein Oberwerkzeugkörper angeordnet, der an seiner arbeitsraumseitigen freien Oberfläche die negative Raumform des zu kaschierenden Trägerformteils aufweist. Der Oberwerkzeugkörper wird im Folgenden auch Matrize genannt. Der Oberwerkzeugkörper ist i.d.R. - wie der Unterwerkzeugkörper - mit einem Heizkanalsystem durchsetzt. Zudem ist bekannt, die konturierte Oberfläche der Matrize mit einem elastischen Werkstoff zu beschichten, woraus eine homogenere Druckverteilung beim Pressen bewirkt werden soll. Die Beschichtung, z.B. aus Silikon, ist vollflächig verklebt oder aufgegossen aufgebracht.

Die beiden Werkzeughälften (Stempel und Matrize) sind über stabile Führungssäulen zueinander geführt.

Zum Kaschieren wird ein arbeitsraumseitig mit bei Raumtemperatur nicht klebrigem Klebstoff versehenes, z.B. luftdurchlässiges Trägerformteil auf den Stempel gelegt und mittels Unterdruck festgehalten. Auf das Trägerformteil wird der Bezugsstoff, der z.B. stempelseitig ebenfalls einen bei Raumtemperatur nicht klebenden Klebstoff trägt, aufgelegt und z.B. durch den durch das Trägerformteil wirkenden Unterdruck lokalisiert. Anschließend werden die in der Regel dauerbeheizten Werkzeuge zum Klebrigmachen des Klebstoffs aufgeheizt und zusammengefahren, so dass die zu kaschierenden Teile zusammengepresst und verklebt werden. Nach dem Kaschieren und Auseinanderfahren der Werkzeuge wird das kaschierte Formteil entnommen.

Häufig weisen Trägerformteile Öffnungen, z.B. für eine Kartentasche in einer Türinnenraumverkleidung eines Pkws, auf, deren Rand aus der Oberflächenerstreckung des Formteils abgebogen als Randsteg ausgeformt ist, wobei eine Abbiegungskante und ein schräger oder bis 90° abgebogener Flankensteg gebildet wird. Ähnliche Verhältnisse können auch am Umgrenzungsrand des Trägerformteils vorliegen.

Diese Randbereiche, aber auch steile Flanken des Bauteils bzw. Trägerformteils bereiten beim Kaschieren Probleme. Die Trägerformteile, die meist aus Werkstoffen bestehen, die temperaturund/oder feuchtigkeitsabhängig schwinden und sich dehnen, weisen häufig nicht exakt die Konturabmessungen der Matrize auf; sie sind vielmehr aufgrund von Temperatur und/oder Feuchtigkeitserhöhungen gewachsen. Dadurch verschieben sich die Randkantenbereiche des Trägerformteils derart, dass beim Zusammenfahren der Werkzeuge zum Pressen die entsprechende Matrizenkante direkt auf die Randkante des Trägerformteils :trifft und das Bezugsmaterial durch Reibung beschädigt oder sogar zerstört. Gleiches geschieht, wenn der Bezugsstoff, wie z.B. Leder, Dickentoleranzen aufweist, wobei sich die Toleranzen des Trägerformteils und des Bezugsstoffs addieren können.

Aufgabe der Erfindung ist, eine Kaschiervorrichtung zu schaffen, mit der die beschriebenen Kaschierprobleme insbesondere in steilen Flankenbereichen und in Randbereichen des Trägerformteils vermieden werden können und der Kaschierdruck insgesamt noch homogener verteilt werden kann.

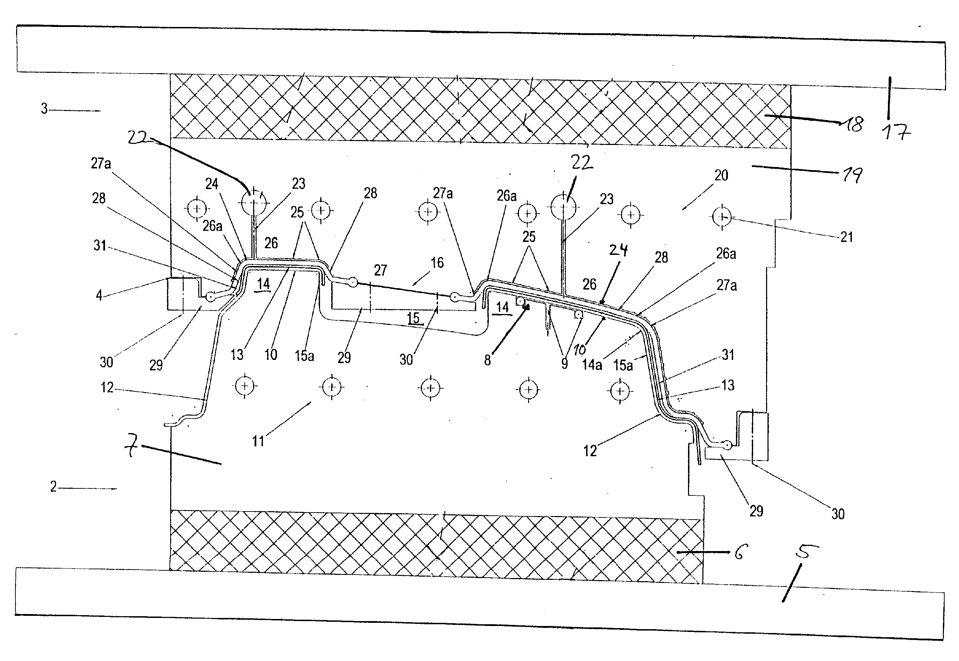

Diese Aufgabe wird durch die Merkmale des Anspruchs 1 gelöst. Vorteilhafte Weiterbildungen der Erfindung werden in den Unteransprüchen gekennzeichnet. Anhand der Zeichnung wird die Erfindung im Folgenden beispielhaft näher erläutert.

Die Zeichnung zeigt eine Kaschiervorrichtung 1 im mit einer Kaschierpresse (nicht dargestellt) zusammengefahrenen Zustand. Die Kaschiervorrichtung 1 weist das Unterwerkzeug bzw. den Stempel 2 und gegenüberliegend das Oberwerkzeug bzw. die Matrize 3 auf. Zwischen den Werkzeugen 2, 3 ist ein Arbeitsraum 4 vorgesehen.

Das Unterwerkzeug 2 ist auf eine Grundplatte 5 montiert, auf der arbeitsraumseitig eine Isolationsplatte 6 angeordnet ist. Auf der Isolationsplatte 6 befindet sich ein Unterwerkzeugkörper 7, in den ein an eine Vakuumsaugeeinrichtung (nicht dargestellt) anschließbares Vakuumkanalsystem 8 eingebracht ist, dessen Kanäle 9 an der arbeitsraumseitigen Oberfläche 10 münden.

Zudem ist im Unterwerkzeugkörper 7 ein Heizkanalsystem 11 mit Heizkanälen 12 vorgesehen, das an eine mit einem Heizfluid arbeitende Heizvorrichtung (nicht dargestellt) anschließbar ist.

Die arbeitsseitige Oberfläche 10 des Unterwerkzeugkörpers 7 weist im Wesentlichen die Kontur eines zu kaschierenden Trägerformteils 12 auf, auf das ein Bezugsstoff 13 aufzukaschieren ist. Die Kontur besteht u.a. aus Erhöhungen 14 und Vertiefungen 15 mit Kantenbereichen 14a und Flankenbereichen 15a, wobei die Vertiefungen 15 sich im Bereich von Öffnungen 16 im Trägerformteil 12 befinden (Vertiefungen müssen nicht nur im Bereich von Öffnungen sein).

Das Oberwerkzeug 3 ist ebenfalls auf eine Grundplatte 17 montiert, auf der arbeitsraumseitig eine Isolationsplatte 18 angeordnet ist. Auf der Isolationsplatte 18 ist ein Oberwerkzeugkörper 19 gelagert, in den ein Heizkanalsystem 20 mit Heizkanälen 21 eingebracht ist.

Die Oberfläche 24 des Oberwerkzeugkörpers 19 bildet die Matrizenform des Trägerformteils 12 mit entsprechenden Vertiefungen 26 und Erhöhungen 27 mit Eckbereichen 26a und Flankenwandungsbereichen 27a, die den Erhöhungen 14 und Vertiefungen 15 des Unterwerkzeugkörpers 7 bzw. Öffnungen 16 des Trägerformteils 12 gegenüberliegend vorgesehen sind.

Erfindungsgemäß ist ein Kanalsystem 22 in den Oberwerkzeugkörper 19 eingebracht, dessen Kanäle 23 zur arbeitsraumseitigen Oberfläche 24 führen und dort in miteinander verbundenen Auslässen 25 münden. Das Kanalsystem 23 ist an eine Vakuumeinrichtung (nicht dargestellt) und an eine Fluiddruckeinrichtung wahlweise umschaltbar ausgebildet.

Zudem sieht die Erfindung vor, auf der Oberfläche 24 des Oberwerkzeugkörpers 19 eine die Konturen der Matrizenoberfläche aufweisende, vorzugsweise im Gießverfahren erzeugte Membrane 28, vorzugsweise aus einem elastischen Material, z.B. aus Silikon, anzuordnen, die lediglich in den Randbereichen des Oberwerkzeugkörpers 19 und den Bereichen von Öffnungen 16 im Trägerformkörper 12 mit Rahmenleisten 29 fluiddicht eingespannt ist, wobei die Rahmenleisten 29 randlich am Oberwerkzeugkörper 19, z.B. mittels Schrauben 30, befestigt sind. In den übrigen Bereichen wird die Membrane 28 durch ein durch das Kanalsystem 22 vermitteltes Vakuum auf der Oberfläche 24 vor dem Kaschieren festgehalten.

Wesentlich ist, dass die Erhöhungen 26 und Vertiefungen 27 der Matrizenoberfläche 24 im Kantenbereich 26a und Flankenbereich 27a einschließlich der Membrandicke einen vorbestimmten, weiteren Durchmesser aufweisen als die entsprechenden Durchmesserabmessungen der Kantenbereiche 14a und Flankenbereiche 15a der Stempeloberfläche 10 einschließlich der Dicke aus Trägerformteil 12 und Bezugsstoff 13 an diesen Stellen betragen können, so dass ein freier Spalt, insbesondere Ringspalt 31 zwischen Bezugsstoffoberfläche und Membranoberfläche verbleibt, wenn die Werkzeuge 2 und 3 zum Kaschieren zusammengefahren sind. Der Ringspalt 31 wird so groß gewählt, dass beim Zusammenfahren der Werkzeuge 2, 3 vorzugsweise keine Berührung, zumindest aber keine schädigende Reibung auf den Bezugsstoff 13 ausgeübt werden kann, selbst wenn das Trägerformteil 12 und/oder der Bezugsstoff 13, z.B. aufgrund von Toleranzen oder Ausdehnungen, berechenbare größere Abmessungen als vorgegeben aufweisen als die Konturen der Stempeloberfläche 10.

Beispielsweise werden Ringspaltdicken von 0 bis 3 mm, insbesondere von 0,5 bis 1,5 mm vorgesehen bei Bezugsstoffdicken und Bezugsstofftoleranzen von z.B. 1,35 mm ± 0,20 mm und Trägerformteildicken und Trägerformteiltoleranzen von z.B. 2,0 mm ± 0,10 mm.

In den Ringspalt 31 wird beim Kaschierprozess die Membrane 28 elastisch ausgedehnt und aufgebläht, indem durch das Kanalsystem 22 ein Fluid, z.B. Druckluft, in den Zwischenraum zwischen Matrizenoberfläche 24 und Membrane 28 eingebracht wird, so dass die Membrane 28 an dieser Stelle gegen.die entsprechenden Kaschierelementzonen gepresst wird.

Die Erfindung ermöglicht nicht nur, die Probleme in den beschriebenen Problemzonen der Trägerformteile zu bewältigen, sondern sie ermöglicht auch einen Bezugsstoffwechsel, indem dickere oder dünnere Bezugsstoffe mit denselben Werkzeugen verarbeitbar sind, wenn insgesamt ein durchgehender Ringspalt zwischen arbeitsraumseitiger Membranoberfläche und Bezugsstoffoberfläche vorgesehen wird, der beim Kaschieren geschlossen wird, indem ein Druckfluid in den Zwischenraum zwischen Membrane 28 und Matrizenoberfläche 24 eingeführt wird.

## Patentansprüche

1. Kaschiervorrichtung (1) zum Kaschieren eines Trägerformteils (12) mit einem Bezugsstoff (13) aufweisend ein Unterwerkzeug (2) und ein Oberwerkzeug (3), die über Mittel zum Einspannen in eine Kaschierpresse verfügen und zwischen sich einen Arbeitsraum (4) bilden, wobei die Unterwerkzeugoberfläche (10) dem Trägerformteil (12) entsprechend konturiert mit Erhöhungen (14), mit Kantenbereichen (14a) und Vertiefungen (15), mit Flankenbereichen (15a) sowie die Oberwerkzeugoberfläche (24) entsprechend als Matrize mit Vertiefungen (26) und Erhöhungen (27) mit Eckbereichen (26a) und Flankenwandungsbereichen (27a) konturiert sind und wobei das Oberwerkzeug (3) arbeitsraumseitig ein elastisches Andrückmittel aufweist,
**dadurch gekennzeichnet, dass**
das Andrückmittel eine die Matrizenoberfläche abdeckende Membrane (28) ist, die jeweils lediglich in Randbereichen der Matrizenoberfläche (24) fluiddicht am Oberwerkzeug (3) befestigt ist und insbesondere auch die Eckbereiche (26a) und Flankenwandungsbereiche (27a) überdeckt.

2. Kaschiervorrichtung nach Anspruch 1,
**dadurch gekennzeichnet, dass**
die Membrane (28) ein die Konturen der Matrize aufweisendes, vorzugsweise gegossenes oder tiefgezogenes oder vulkanisiertes Teil ist.

3. Kaschiervorrichtung nach Anspruch 1 und/oder 2,
**dadurch gekennzeichnet, dass**
die Membrane (28) aus einem elastischen Material besteht.

4. Kaschiervorrichtung nach einem oder mehreren der Ansprüche 1 bis 3,
**dadurch gekennzeichnet, dass**
die Membrane (28) aus vorzugsweise Silikon oder Polyurethan-Material besteht.

5. Kaschiervorrichtung nach einem oder mehreren der Ansprüche 1 bis 4,
**dadurch gekennzeichnet, dass**
in die Matrizenoberfläche (24) über der Membrane (28) Auslässe (25) von Kanälen (23) eines an eine Vakuumeinrichtung und eine Druckfluideinrichtung anschließbaren, im Oberwerkzeug (3) angeordneten Kanalsystems (22) münden, über die wechselnd die Membrane (28) an die Matrizenoberfläche (24) gesaugt oder mittels eines Fluids, z.B. mit Druckluft, gegen den Bezugsstoff (13) und das Trägerformteil (12) drückbar ist.

6. Kaschiervorrichtung nach einem oder mehreren der Ansprüche 1 bis 5,
**dadurch gekennzeichnet, dass**
die Matrizenabmessungen einschließlich der Membrane (28) und die möglichen Trägerformteilabmessungen einschließlich Bezugsstoffdicke insbesondere in den Eckbereichen (26a) und/oder den Flankenwandungsbereichen (27a) derart ausgebildet sind, dass dazwischen ein vorgegebener Spalt (31) vorgesehen ist, wenn die Werkzeuge (2, 3) zusammengefahren sind.

7. Kaschiervorrichtung nach einem oder mehreren der Ansprüche 1 bis 6,
**dadurch gekennzeichnet, dass**
die Werkzeuge (2, 3) Werkzeugkörper (7, 8) aufweisen, in die vorzugsweise jeweils ein Heizkanalsystem (11, 20) eingebracht ist.

8. Kaschiervorrichtung nach einem oder mehreren der Ansprüche 1 bis 7,
**dadurch gekennzeichnet, dass**
in die konturierte Oberfläche (10) des Unterwerkzeugkörpers (7) Kanäle (9) eines Vakuumkanalsystems (8) münden.

9. Kaschiervorrichtung nach Anspruch 8,
**dadurch gekennzeichnet, dass**
auf die konturierte Oberfläche (10) des Unterwerkzeugkörpers (7) ein luftdurchlässiges Trägerformteil (12) aufgelegt ist.
